# EUROPEAN PATENT APPLICATION

(11) **EP 4 819 041 A1**
(43) Date of publication of application: **07.10.2026**
(21) Application number: 25167326.5
(22) Date of filing: 31.03.2025
(51) Int. Cl.: G06T 7/246

(54) **DETERMINING OBJECT MOTION INFORMATION BASED ON TIME-RESOLVED MEDICAL IMAGING DATA**

(71) Applicant: Siemens Healthineers AG, 91301 Forchheim (DE)
(72) Inventor: Dickmann, Jannis, 91052 Erlangen (DE); Buizza, Giulia, 91052 Erlangen (DE); Wohlfahrt, Patrick, 91054 Erlangen (DE)
(74) Representative: Siemens Healthineers Patent Attorneys

(57) **Abstract**

For determining object motion information based on time-resolved medical imaging data, a time-resolved 3D image reconstruction (4) representing an imaged object (6) during an imaging period is received. A first amplitude of a motion of a first region of interest in the time-resolved 3D image reconstruction (4), which corresponds to a surface region (7) on a surface of the object (6), as a function of time during the imaging period is determined based on the time-resolved 3D image reconstruction (4). A first motion trace (5), which represents an amplitude of a motion of the surface region (7) as a function of time during the imaging period, is determined based on the first amplitude.

## Description

The present invention is directed to computer-implemented methods for determining object motion information based on time-resolved medical imaging data and for planning a medical treatment of a patient. The invention is further directed to a corresponding data processing system for carrying out such computer-implemented methods, to a medical imaging system comprising such a data processing system and to a corresponding computer program product.

Time-resolved medical imaging, for example 4D computed tomography, CT, imaging, or 4D magnetic resonance imaging, MRI, may be used for various applications including for example planning radiotherapy treatment of moving tumors, for example in the lung or liver. Therein, 3D image data are acquired at various time points during a motion, for example a cyclic motion, for example during the patient's respiratory cycle. The resulting time-resolved 3D image data, which may also be denoted as time-resolved 3D image reconstruction or 4D image reconstruction or 4D volume, respectively, may for example be used to contour the spatial extent of the tumor as it moves over time.

The acquisition of 4D CT or MRI data may be realized, for example, by using low-pitch spiral, sequence scans or ciné scans, in particular breathing-adapted sequence scans or ciné scans. Such acquisition modes aim to provide a full reconstruction, for 4D CT in particular with a reconstruction angle range of at least 180°, at each of several time points or intervals, for example in the order of 10 time points or intervals, within the respiratory cycle and at each slice. For the reconstruction of 4D CT data, typically an external gating device is used, which provides a trace of the patient's respiratory amplitude during the acquisition. With the help of the respiratory trace, the individual raw imaging datasets, in particular 2D imaging datasets, acquired over time can be sorted or binned into respective bins for each of the time points or intervals, which allows for reconstructing the various 3D datasets independently and, for example, combine them to the 4D reconstruction. For 4D MRI data, typically an internal breathing surrogate is calculated from the acquired data.

Furthermore, the respiratory trace may be used to generate treatment planning data, which defines gating thresholds, for example for expiration gating, in particular in physical units, that allow for gating at a radiation source, for example a LINAC, during radiotherapy treatments using the same or a compatible gating device.

External gating devices can be realized as belts around the patient's chest, marker blocks on the patient's chest tracked by optical systems, laser distance measurements, or 3D cameras, for example. Such systems are costly, require additional training of staff, and slow down the workflow due to the additional calibration and setup time.

The publication by P. J. Schleyer et al.: "Retrospective data-driven respiratory gating for PET/CT", Phys. Med. Biol. 54 (2009) 1935-1950, describes an automatic, data-driven gating method which retrospectively derives the respiratory signal from acquired PET and CT data. The PET data is acquired in listmode and analyzed in sinogram space, and the CT data is acquired in ciné mode and analyzed in image space.

The publication by R. Li et al.: "4D CT sorting based on patient internal anatomy", Phys. Med. Biol. 54, 4821 describes a sorting method based on multiple internal anatomical features for multi-slice CT scan. A measure called spatial coherence is used to select the optimal internal feature at each couch position and to generate respiratory signals.

The publication by M. Chao et al.: "Robust breathing signal extraction from cone beam CT projections based on adaptive and global optimization techniques", Phys. Med. Biol. 61, 3109 presents a study of extracting respiratory signals from cone-beam computed tomography (CBCT) projections within the framework of the Amsterdam Shroud technique.

The publication by C. Hui et al.: "Internal respiratory surrogate in multislice 4D CT using a combination of Fourier transform and anatomical features.", Med. Phys., 42, 4338-4348 proposes an algorithm that combines information from a Fourier transform of CT images and from internal anatomical features to form a respiration signal. The algorithm first extracts potential respiratory signals from low-frequency components in the Fourier space and selected anatomical features in the image space. A clustering algorithm then constructs groups of potential respiratory signals with similar temporal oscillation patterns. The clustered group with the largest number of similar signals is chosen to form the final respiration signal.

It is an objective of the present invention to provide a simplified concept for determining object motion information based on time-resolved medical imaging data.

This objective is achieved by the subject matter of the independent claim. Preferred embodiments and further implementations are subject matter of the dependent claims.

The invention is based on the idea to generate a motion trace, which represents an amplitude of a motion of a surface region on a surface of the imaged object as a function of time, depending on the amplitude of a motion of a first region of interest in a time-resolved 3D image reconstruction.

According to a first aspect of the invention, a computer-implemented method for determining object motion information based on time-resolved medical imaging data is provided. Therein, a time-resolved three-dimensional, 3D, image reconstruction representing an imaged object during an imaging period is received. A first amplitude of a motion of a first region of interest in the image reconstruction, which corresponds to a surface region on a surface of the object, as a function of time during the imaging period is determined based on the image reconstruction. A first motion trace, which represents an amplitude of a motion of the surface region as a function of time during the imaging period, is determined based on the first amplitude as a function of time.

Unless stated otherwise, all steps of the computer-implemented method may be performed by a data processing system, which comprises at least one data processing device. In particular, the at least one data processing device is configured or adapted to perform the steps of the computer-implemented method. For this purpose, the at least one data processing device may for example store a computer program comprising instructions which, when executed by the at least one data processing device, cause the at least one data processing device to execute the computer-implemented method. The expressions "data processing system" and "at least one data processing device" may be used interchangeably, here and in the following. This holds also for respective expressions derived therefrom.

In case the at least one data processing device comprises two or more data processing devices, certain steps carried out by the at least one data processing device may also be understood such that different data processing devices carry out different steps or different parts of a step. In particular, it is not required that each data processing device carries out the steps completely. In other words, carrying out the steps may be distributed amongst the two or more data processing devices.

From each implementation of the computer-implemented method, a respective implementation of a method for determining object motion information based on time-resolved medical imaging data, which is not purely computer-implemented, is obtained by including respective steps of generating time-resolved 3D image reconstruction and/or imaging datasets based on which the time-resolved 3D image reconstruction is generated.

The time-resolved 3D image reconstruction may also be denoted as 4D image reconstruction. The 4D image reconstruction may comprise or consist of a plurality of time-independent 3D image reconstructions. The 4D image reconstruction is, in particular, generated based on a plurality of imaging datasets, in particular two-dimensional, 2D, imaging datasets, representing the imaged object, wherein each imaging dataset of the plurality of imaging datasets corresponds to a respective imaging subperiod within the imaging period. Each of the 3D image reconstructions may correspond to a predefined time instance or time interval within the imaging period, in particular within one of the imaging subperiods. A respective 3D image reconstruction is, for example, generated based on a subset of the plurality of imaging datasets, whose imaging subperiods contain the respective time instance or time interval. The 4D image reconstruction may, in particular, comprise or consist of the plurality of time-independent 3D image reconstructions ordered temporally according to the time instances or time intervals, respectively.

For example, the imaging datasets are generated by a medical imaging device. In particular, the imaging datasets may comprise or consist of imaging raw data or may be generated based on imaging raw data. For example, the medical imaging device may be an X-ray based medical imaging device, such as a CT device or a cone-beam CT, CBCT, device, for example a C-Arm device. The imaging datasets may then comprise or consist of imaging raw data generated by an X-ray detector of the medical imaging device. In particular, a single imaging dataset may contain data acquired for different angulation angles of the medical imaging device. For example, the imaging datasets may be respective sinograms. Alternatively or in addition, the medical imaging device may be an MRI device, a PET device, a PET/CT device, an MRI/PET device et cetera.

The imaging period may comprise or consist of one or more data acquisition periods. A single data acquisition period is, in particular, an uninterrupted period of time during which respective imaging data is acquired, in particular continuously. In case of an X-ray based medical imaging device, for example, a data acquisition period corresponds to a time period during which the X-ray beam is activated on and the detector actually acquires data. In some cases, the X-ray beam may be switch on and off until data acquisition is completed, which then corresponds to multiple data acquisition periods.

Analogously, an imaging subperiod may as well comprise or consist of one or more data acquisition periods.

The first amplitude may be an amplitude of the motion of a first region of interest, ROI, along a predefined first direction. Therein, the motion of the first ROI in the 4D image reconstruction comprises, in particular, components in the first direction and may, for example, also comprise further components in a second direction and/or a third direction, the second direction and/or a third direction being different from, for example perpendicular to, the first direction. For example, the first direction may be perpendicular to a longitudinal axis of the medical imaging device, wherein the longitudinal axis is commonly referred to as z-axis. The longitudinal axis is, for example, parallel to a longitudinal body axis of the patient, in case the object is a patient.

The motion may, for example, be a cyclic motion, in particular a respiratory motion of the patient or, in other words, a motion of the body surface, for example the chest, of the patient due to the respiration.

The first direction is, in particular, a dominant direction of the motion of the first ROI, for example of the respiratory motion. The first direction may, for example, be parallel to a height axis of the medical imaging device or perpendicular to a table surface of a patient table the patient is places on during the imaging period.

The first amplitude may for example be given in physical units, such as millimeters, which is possible since the first amplitude is obtained directly from the 4D image reconstruction. The first amplitude may, for example correspond to an amplitude of a motion of a characteristic point, for example a center point or the like, of the first ROI or may be determined based on the amplitude of respective motions of two or more points in the first ROI, for example by averaging.

The first motion trace may, for example, be a curve of the first amplitude as a function of time or a plurality of temporally ordered tuples of the first amplitude and the corresponding times. Generating the first motion trace may comprise gathering and temporally ordering the respective first amplitudes. Generating the first motion trace may, in some implementations, also comprise further processing steps such as smoothing, filtering, et cetera.

The first ROI may be defined by a user and provided to the data processing system via a user interface of the data processing system. To this end, the 4D image reconstruction or a part of it may be displayed to the user via a display device. The first ROI may also be determined automatically by the data processing system based on the 4D image reconstruction and a predefined rule defining the first ROI. The first ROI is, in particular, a 2D area. It may be a plane 2D area. The latter is, however, not mandatory. Rather, the first ROI may also be another 2D manifold in 3D space, in particular a curved area.

The first motion trace represents object motion information of the imaged object, which is determined based on time-resolved medical imaging data, namely the 4D image reconstruction.

By using the computer-implemented method according to the invention, object motion information, in form of the first motion trace, may be determined based time-resolved medical imaging data in a simplified way, in particular without requiring an external gating device. Furthermore, since the first motion trace is determined directly based on the 4D image reconstruction, a particularly high degree of accuracy of the first motion trace is achieved.

The first motion trace may be used for various applications including the planning of a medical treatment, for example for defining gating thresholds et cetera. The first motion trace may also be used to validate and or re-generate the 4D image reconstruction. For example, when generating the 4D image reconstruction, this may be done assuming that there is no motion of the object at all or an initial estimation for the motion of the object may be assumed. The assumed motion may then for example be compared with the first motion trace. If it is found that there is a significant deviation between the first motion trace and the assumed motion, a warning message may be generated and/or the 4D image reconstruction maybe re-generated now using the first motion trace instead of the initially assumed motion.

It is noted that the first motion trace may represent the motion of the surface region in a single direction. However, it is possible that one or more further first motion traces representing the motion of the surface region along respective other directions, may be determined in the analog way as described.

According to several embodiments, a plurality of imaging datasets representing the imaged object at at least two different longitudinal positions according to a predefined longitudinal axis, in particular the longitudinal axis of the medical imaging device or the object, respectively, is received. Each imaging dataset of the plurality of imaging datasets corresponds to a respective imaging subperiod within the imaging period. For each of the imaging datasets, a respective preliminary motion trace, which represents an amplitude of a motion of the object during the respective acquisition subperiod as a function of time, is determined by applying a predefined motion estimation algorithm to the respective imaging dataset, in particular only to the respective imaging dataset and/or not to any other of the imaging datasets. A third motion trace, which represents the amplitude of the motion of the object at least during a union of the acquisition subperiods, in particular all acquisition subperiods of all imaging datasets of the plurality of imaging datasets, as a function of time, is determined based on the determined preliminary motion traces, in particular based on all determined preliminary motion traces.

The imaging datasets are, in particular, 2D imaging datasets. In particular, it is not necessary to reconstruct a 3D or even 4D volume in order to obtain the third motion trace.

The plurality of imaging datasets may be considered as time-resolved data as each of them is acquired during a respective acquisition subperiod. Therein, imaging datasets corresponding to different longitudinal positions, in particular z-positions or positions along the z-axis, respectively, may be acquired in parallel or at the same time or partially in parallel or sequentially depending on the respective acquisition trajectory.

In particular, a respective acquisition subperiod is uniquely assigned to each of imaging dataset meaning that there is exactly one acquisition subperiod for each imaging dataset. On the other hands, it may or may not be provided that different imaging datasets correspond to the same or partially the same acquisition subperiod.

It is noted that the plurality of imaging datasets may but does not necessarily comprise all data acquired during the imaging period.

The union of the acquisition subperiods may be identical to the imaging period. In other cases, there may be one or more time intervals within the imaging period, which are not covered by any acquisition subperiod. In the latter case, it may be provided that the third motion trace represents the amplitude of the motion of the object only during the union of the acquisition subperiods. It may, however, also in such cases be provided that the third motion trace represents the amplitude of the motion of the object during the whole imaging period. In this case, determining the third motion trace based on the preliminary motion traces may for example comprise an estimation or prediction, in particular for the time intervals for which no acquired data is available.

The motion estimation algorithm used for determining the individual preliminary motion traces may be a known algorithm, for example an algorithm described in one of the publications mentioned in the introductory part of the present disclosure, in particular the algorithm described by Schleyer et al.

In such embodiments, a plurality preliminary motion traces with a potentially reduced accuracy is used as a basis to generate a refined motion trace, namely the third motion trace, for the whole imaging period or at least the union of the acquisition subperiods. Therefore, the third motion trace is determined with a particularly high accuracy and without requiring a 3D or 4D image reconstruction.

In general, the third motion trace may be generated based on the preliminary motion traces, for example by averaging the preliminary motion traces that is computing an average of all available data from the preliminary motion traces for each time instance within the imaging period or within the union of the acquisition subperiods. On the other hand, it is also possible to use more sophisticated approaches to determine the third motion trace, for example based on machine learning models, as will be described for further embodiments below.

For example, the time-resolved 3D image reconstruction may be generated depending on the plurality of imaging datasets and the third motion trace.

In particular, a known algorithm, in particular a binning algorithm based on the breathing trace (phase-based or amplitude-based), for 4D image reconstruction may be used.

According to several embodiments, at least two of the imaging subperiods are different from each other.

According to several embodiments, at least two of the imaging subperiods overlap each other.

According to several embodiments, the imaging period comprises a time period, which is contained by only one of the imaging subperiods.

According to several embodiments, the imaging period comprises a further time period, which is contained by none of the imaging subperiods. In particular, the third motion trace represents the amplitude of the motion of the object also during the further time period, in particular during the whole imaging period.

The different scenarios for the imaging subperiods may occur in different combinations for example for sequential acquisition schemes and/or ciné acquisition schemes and/or spiral acquisitions, in particular for CT or CBCT acquisitions.

In sequential or ciné acquisition schemes, a first subset of the imaging datasets is acquired for a first set of one or more longitudinal positions during the same first imaging subperiod. Then, a second subset of the imaging datasets is acquired for a second set of one or more longitudinal positions during the same second imaging subperiod. This may be repeated again, in particular multiple times. For example, in case the object is positioned on a patient table, the patient table may be at a fixed position during the first imaging subperiod as well as during the second imaging subperiod. Furthermore, there may be a temporal gap between the first imaging subperiod and the second imaging subperiod. During the temporal gap, the longitudinal position of the patient table may, for example, be changed. Furthermore, the first set of one or more longitudinal positions and the second set of one or more longitudinal positions may or may not overlap.

In spiral acquisition schemes, the longitudinal position of the patient table may be changed continuously or quasi-continuously during the individual imaging subperiods. For example, subsequent imaging subperiods may partially overlap such that they have different starting and end times and a common overlapping period.

According to several embodiments, the plurality of imaging datasets corresponds to respective sinograms of an X-ray detector or, in other words, respective sinograms of projection images acquired by the X-ray detector.

In particular, each imaging dataset of the plurality of imaging datasets is a sinogram. A sinogram is a 2D representation of the X-ray attenuation by the imaged object for a given longitudinal position. A sinogram contains the attenuation for a plurality of angulation angles and a plurality of detector positions or detector pixels along a direction perpendicular to the longitudinal axis. Therein, the angulation angle may for example be varied during a given acquisition subperiod.

An advantage of using sinograms as input for determining the preliminary motion traces is that no or only minimal pre-processing of the X-ray raw data measured by the X-ray detector, in particular an X-ray detector of the medical imaging device, is required.

According to several embodiments, the plurality of imaging datasets corresponds to respective X-ray projection images.

In particular, each imaging dataset of the plurality of imaging datasets is an X-ray projection image.

An advantage of using X-ray projection images as input for determining the preliminary motion traces is that only a low amount of pre-processing of the X-ray raw data generated by the X-ray detector is required.

According to several embodiments, a longitudinal extent along the longitudinal axis of the first region of interest is determined.

In some embodiments, all longitudinal positions of the plurality of imaging datasets lie within the longitudinal extent.

In alternative embodiments, an initial superset of imaging datasets representing the imaged object is received and the plurality of imaging datasets is selected from the initial superset of imaging datasets such that all longitudinal positions of the plurality of imaging datasets lie within the longitudinal extent.

In both cases, it is ensured that all longitudinal positions of the plurality of imaging datasets lie within the longitudinal extent. Consequently, the third motion trace is particularly correlated with the motion of the first ROI by restricting the data used for determining the third motion trace accordingly. On the other hand, also the first motion trace is particularly correlated with the motion of the first ROI by construction. Thus, the first motion trace and the third motion trace are more comparable to each other.

For example, the third motion trace may be used for the same purposes as described with respect to the first motion trace. In embodiments where both the first and the third motion trace are determined, one of them may be selected according to predefined criteria, for example regarding the smoothness of the traces, how well they match an expected shape or frequency et cetera.

Alternatively or in addition, the third motion trace may be validated depending on the first motion trace or vice versa.

In some embodiment, the 4D image reconstruction is generated depending on the plurality of imaging datasets and the third motion trace. Then the first motion trace is determined based on the 4D image reconstruction as described above and then the third motion trace is validated depending on the first motion trace.

Therein, it is exploited that the first motion trace is obtained directly from the 4D image reconstruction and therefore may be particularly reliable. On the other hand, the third motion trace is available already before the 4D image reconstruction is obtained and may therefore be used to generate the 4D image reconstruction. The validation may have negative result, namely that there is a deviation between the first motion trace and the third motion trace, which is significant according to a predefined criterion. Otherwise, the result of the validation is positive. In case of a negative result, the 4D image reconstruction may be re-generated or corrected.

In some embodiments, the validation of the third motion trace comprises computing a deviation of the third motion trace from the first motion trace. If the deviation is larger than a predefined maximum deviation, the time-resolved 3D image reconstruction is re-generated depending on the plurality of imaging datasets and the first motion trace.

The deviation may for example be computed as a mean squared error between the third motion trace and the first motion trace. Also other measures for the deviation may be used.

In this way the accuracy of the 4D image reconstruction is improved in case the third motion trace has a reduced accuracy but at the same time, unnecessarily re-generating the 4D image reconstruction is avoided in case the third motion trace has a high accuracy.

According to several embodiments, determining the third motion trace comprises or consists of applying a machine learning model, MLM, in particular a trained MLM, to input data. The input data which depends on, for example comprises or consists of, the determined, in particular all determined, preliminary motion traces.

In particular, the MLM is or has been trained to predict the third motion trace as an output based on the input data depending on the preliminary motion traces. Therein, the third motion trace may be predicted by the MLM for the whole imaging period or at least for the union of the acquisition subperiods.

In general terms, a trained MLM may mimic cognitive functions that humans associate with other human minds. In particular, by training based on training data the MLM may be able to adapt to new circumstances and to detect and extrapolate patterns. Another term for a trained MLM is "trained function". An MLM can also be referred to as an algorithm, model or function trainable by machine-learning. A trained MLM can also be referred to as an algorithm, model or function trained by machine-learning. An MLM may be implemented in software and/or in hardware.

In general, parameters of an MLM can be adapted or updated by means of training. In particular, supervised training, semi-supervised training, unsupervised training, reinforcement learning and/or active learning can be used. Furthermore, representation learning, also denoted as feature learning, can be used. In particular, the parameters of the MLMs can be adapted iteratively by several steps of training. In particular, within the training a certain loss function, also denoted as cost function, can be minimized. In particular, within the training of an artificial neural network, ANN, the backpropagation algorithm can be used.

In particular, an MLM may comprise an ANN, a support vector machine, a decision tree and/or a Bayesian network, and/or the MLM may comprise an algorithm based on k-means clustering, Q-learning, a genetic algorithm and/or association rules. In particular, an ANN can be or comprise a deep neural network, a convolutional neural network, CNN, or a convolutional deep neural network. Furthermore, an ANN can be an adversarial network, a deep adversarial network and/or a generative adversarial network, GAN.

In several embodiments, the MLM is an ANN.

The ANN may comprise or consist of a recurrent neural network, RNN, for example a long short-term memory, LSTM, network. In this case, the input data may, for example, be provided to the ANN in terms of a sequence or an ordered sequence of vectors, wherein each vector corresponds to one of the preliminary motion curves. The output of the ANN then corresponds to an output vector, which represents the third motion curve.

The ANN may also comprise an encoder module, which is given by a CNN and acts on the input data. An output of the encoder module corresponds to encoded features. The ANN further comprises an RNN module, in particular an LSTM module, which acts on the encoded features and generated the third motion curve as an output. In such embodiments, the input data may be provided as two-dimensional input data or a matrix, respectively, wherein the different columns of the matrix are given by the vectors corresponding to the preliminary motion curves. Alternatively, the different rows of the matrix are given by the vectors corresponding to the preliminary motion curves.

According to several embodiments, a second amplitude of a motion of a second region of interest in the time-resolved 3D image reconstruction, which corresponds to a region, for example a three-dimensional or two-dimensional region, or a point inside the object, as a function of time during the imaging period is determined based on the time-resolved 3D image reconstruction. A second motion trace, which represents an amplitude of a motion of the region or point inside the object as a function of time during the imaging period is determined based on the second amplitude.

In particular, a correlation measure, for example a correlation factor, between the motion of the region or point inside the object and the motion of the surface region is determined based on the first motion trace and the second motion trace.

The correlation measure is, in particular, a measure for how strongly the motion of the first ROI is correlated with the motion of the second ROI. For example, the correlation measure may be a measure for how strong the effect of the respiratory motion affects the motion of the second ROI.

Consequently, when the motion of the surface region on the surface of the object is determined again at a later point, for example during a treatment, in particular by means of an external gating device or another method, the motion of the region or point inside the object may be estimated by using the correlation factor even if no imaging data representing the motion of the region or point inside the object is available.

The surface of the object may be an outer surface or an internal surface of the object. In case the object is a patient, the surface may, for example, be a surface on the skin of the patient or a surface on an inner organ, such as the liver, of the patient.

The correlation measure may for example be a correlation factor. The correlation factor may for example be given by a ratio of the second amplitude to the first amplitude or vice versa. The correlation factor may for example be given by a ratio of a function of the second amplitude to a function of the first amplitude or vice versa. The functions of the first and the second amplitudes may for example be averages over the data acquisitions period or a part of it. The correlation factor may also be given by a function, for example an average over the data acquisitions period or a part of it, of the ratio of the second amplitude to the first amplitude or vice versa. However, also other correlation measures may be used.

For example, the first amplitude and the second amplitude may correspond to directions of the motions of the first ROI and the second ROI, respectively, which are parallel to each other. For example, said direction may be denoted as y-direction in a Cartesian coordinate system (x, y, z).

For example, one or two further second amplitudes of the motion of the second ROI as a function of time during the imaging period may be determined based on the 4D image reconstruction. The one or two further second amplitudes may, for example, correspond to directions in the x- or z-direction, respectively. One or two respective further second motion traces, which represent a respective further amplitude of the motion of the region or point inside the object as a function of time during the imaging period, may be determined based on the respective further second amplitude.

The correlation measure may be determined additionally based on the one or two respective further second motion traces. Alternatively or in addition, one or two respective further correlation measures may be determined based on the first motion trace and the one or two further second motion traces.

According to a second aspect of the invention, a computer-implemented method for planning a medical treatment of a patient is provided. Therein, a computer-implemented method for determining object motion information according to the invention is carried out in an embodiment, which comprises determining the correlation measure. Furthermore, the object is the patient, and the motion of the surface region corresponds to a respiratory motion of the patient in such embodiments.

An allowed range for the amplitude of the respiratory motion is determined based on a predefined allowed range for the motion of the region or point inside the patient and/or the correlation measure. Treatment planning data for the medical treatment is generated depending on the allowed range for the amplitude of the respiratory motion.

The same may be done analogously for one or more further predefined allowed ranged for the motion of the region or point inside the patient, in some embodiments.

The medical treatment may, for example, comprise a radiotherapy targeting the region or point inside the patient, for example a lesion or tumor located in the region or at the point inside the patient. While the medical treatment is in general not part of a method according to the invention, the treatment planning data may be used for the purpose of the medical treatment, for example for making gating decisions et cetera.

The motion of the region or point inside the patient may for example be restricted to the predefined allowed range in order to avoid a treatment, in particular application of ionizing radiation, to portions of the patient's body where it is not intended to be applied. It is, however, not trivial or even not possible in some cases to provide a live monitoring of the region or point inside the patient, in particular the tumor motion, during the medical treatment.

Therefore, the correlation measure may be used to translate the allowed range for the motion of the region or point inside the patient to the allowed range for the amplitude of the respiratory motion. In consequence, instead of monitoring the motion of the region or point inside the patient, its respiratory motion may be monitored.

According to several embodiments, the medical treatment is a radiotherapy treatment, wherein the treatment planning data comprises a provision for restricting, in particular temporally restricting, an application of an ionizing radiation to the region or point inside the patient, in particular during the radiotherapy treatment, depending on the amplitude of the respiratory motion.

In particular, the provision for restricting the application of the ionizing radiation defines when or under which conditions the ionizing radiation shall be applied to the region or point inside the patient and/or when or under which conditions the ionizing radiation shall not be applied to the region or point inside the patient.

In particular, the radiotherapy treatment may be planned as a gated radiotherapy treatment, wherein at least some gating decisions are made based on the amplitude of the respiratory motion, which translates to a corresponding motion of the region or point inside the patient.

According to a third aspect of the invention, a computer-implemented method for training an MLM for use in a computer-implemented method for determining object motion information based on time-resolved medical imaging data, in particular in a computer-implemented method according to the first or second or fifth aspect of the invention, is provided. Therein, a plurality of training imaging datasets representing an imaged training object at at least two different longitudinal positions according to a predefined longitudinal axis is received, wherein each of the training imaging datasets corresponds to a respective predefined training imaging subperiod within a training imaging period. For each of the training imaging datasets, a respective preliminary training motion trace, which represents an amplitude of a motion of the training object during the respective acquisition subperiod as a function of time, is determined by applying a motion estimation algorithm to the respective training imaging dataset. A third training motion trace, which represents the amplitude of the motion of the training object at least during a union of the training acquisition subperiods as a function of time, is determined based on the determined preliminary training motion traces.

Furthermore, a ground truth motion trace, which represents the amplitude of the motion of the training object at least during the union of the training acquisition subperiods as a function of time, is provided. A predefined loss function is evaluated depending on the ground truth motion trace and the third training motion trace, in particular depending on a deviation, for example a mean-squared error, of the third training motion trace from the ground truth motion trace. The MLM is updated depending on a result of the evaluation of the loss function.

The described steps correspond to a single training step. A plurality of such steps may be carried out under variation of the training imaging datasets, for example using training imaging datasets of the same or different training objects. In particular, the steps may be carried out until a predefined convergence or termination criterion is fulfilled.

The ground truth motion trace may for example be determined by using a convention external gating device during a data acquisition for the training imaging datasets. It is also possible to use a phantom object as the training object which does not move and simulate the motion to generate the training imaging datasets. Then the ground truth motion trace is known from the simulation per se.

According to a fourth aspect of the invention, a further computer-implemented method for determining object motion information based on time-resolved medical imaging data is provided. Therein, a plurality of imaging datasets representing the imaged object at at least two different longitudinal positions according to a predefined longitudinal axis is received, wherein each of the imaging datasets corresponds to a respective imaging subperiod within an imaging period. For each of the imaging datasets, a respective preliminary motion trace, which represents an amplitude of a motion of the object during the respective acquisition subperiod as a function of time, is determined by applying a motion estimation algorithm to the respective imaging dataset. A third motion trace, which represents the amplitude of the motion of the object at least during a union of the acquisition subperiods as a function of time, is determined based on the determined preliminary motion traces.

The explanations, advantages and embodiments described with respect to the first, second and third aspect of the invention, may be applied analogously to the further computer-implemented method according to the fourth aspect of the invention. In particular, respective embodiments of the further computer-implemented method according to the fourth aspect of the invention follow from the various embodiments of the first, second and third aspect of the invention.

According to a fifth aspect of the invention, a data processing system that is configured to carry out a computer-implemented method according to the invention, in particular according to the first, second, third and/or fourth aspect of the invention, is provided.

In the present disclosure, the terms "data processing system" and "at least one data processing device" can be used interchangeably. In particular, a data processing device can be understood to mean a data processing device that contains a processing circuit. The data processing device can therefore, in particular, process data for the purpose of performing computing operations. This may also include operations for performing indexed access to a data structure, for example a look-up table, LUT, as well as a data processing method implemented in hardware.

The data processing device may include, in particular, one or more computers, one or more microcontrollers and/or one or more integrated circuits, for example one or more application-specific integrated circuits, ASIC, one or more field-programmable gate arrays, FPGA, and/or one or more systems-on-a-chip, SoC. The data processing device may also include one or more processors, for example one or more microprocessors, one or more central processing units, CPUs, one or more graphics processing units, GPUs, and/or one or more signal processors, in particular one or more digital signal processors, DSPs. The data processing device may also include a physical or virtual network of computers or other of the mentioned units.

In various embodiments, the data processing device includes one or more hardware and/or software interfaces and/or one or more storage units.

A storage unit may be a volatile data memory, for example a dynamic random access memory, DRAM, or a static random access memory, SRAM, or a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

According to a sixth aspect of the invention, a medical imaging system is provided. The medical imaging system comprises a data processing system according to the fifth aspect of the invention and an imaging device. The imaging device is configured to generate imaging raw data representing the imaged object and the data processing system is configured to generate the time-resolved 3D image reconstruction based on the imaging raw data.

The imaging raw data may for example be given by the plurality of, in particular 2D, imaging datasets or the plurality of imaging datasets may be generated based on the imaging raw data.

The imaging device may for example be an MRI device or an X-ray based imaging device, for example a CT device or a CBCT device, in particular a C-arm device.

According to a seventh aspect of the invention, a computer program comprising instructions is provided. When the instructions are executed by a data processing system, the instructions cause the data processing system to carry out a computer-implemented method according to the invention, in particular of the first, second, third, and/or fourth aspect of the invention.

The instructions may be provided as program code, for example. The program code can for example be provided as binary code or assembler and/or as source code of a programming language, for example C, and/or as program script, for example Python.

Further features and feature combinations of the invention are obtained from the figures and their description as well as the claims. In particular, further implementations of the invention may not necessarily contain all features of one of the claims. Further implementations of the invention may comprise features or combinations of features, which are not recited in the claims.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
- FIG 1: shows schematically an exemplary embodiment of a medical imaging system according to the invention;
- FIG 2: shows schematically aspects of an exemplary embodiment of a computer-implemented method for determining object motion information based on time-resolved medical imaging data according to the invention;
- FIG 3: shows schematically aspects of a further exemplary embodiment of a computer-implemented method for determining object motion according to the invention;
- FIG 4: shows schematically aspects of a further exemplary embodiment of a computer-implemented method for determining object motion according to the invention;
- FIG 5: shows schematically aspects of a further exemplary embodiment of a computer-implemented method for determining object motion according to the invention;
- FIG 6: shows a schematic representation of an artificial neural network, ANN;
- FIG 7: shows a schematic representation of a convolutional neural network, CNN; and
- FIG 8: shows a schematic representation of a recurrent neural network, RNN.

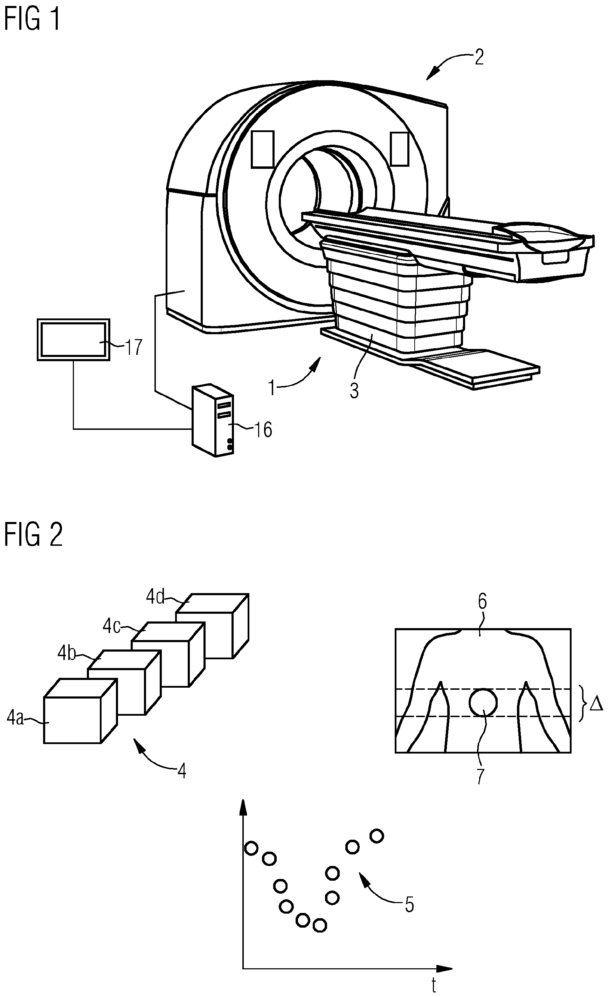

FIG 1 shows schematically an exemplary embodiment of a medical imaging system 1 according to the invention. The medical imaging system 1 comprises a data processing system 16 according to the invention and an imaging device 2, for example a CT device. The data processing system 16 is configured to carry out a computer-implemented method for determining object motion information based on time-resolved medical imaging data according to the invention. FIG 2 shows schematically aspects of an exemplary embodiment of such a computer-implemented method.

The imaging device 2 is configured to generate 2D imaging datasets representing an imaged object 6, for example a plurality of sinograms, each of the imaging datasets corresponding to a respective imaging subperiod within an imaging period. The data processing system 16 is configured to generate a time-resolved 3D image reconstruction or, in other words, a 4D image reconstruction, 4 based on the imaging raw data, the 4D image reconstruction 4 representing the object 6 during the imaging period. In particular, the 4D image reconstruction 4 comprises a plurality of temporally ordered 3D image reconstructions 4a, 4b, 4c, 4d. The total number of 3D image reconstructions 4a, 4b, 4c, 4d may for example be 5 to 20, for example 10 or around 10.

The medical imaging system 1 may also comprise a patient table 3, on which the object 6 may be placed. The medical imaging system 1 may also comprise a display device 17.

According to the computer-implemented method, a first amplitude of a motion of a first ROI in the 4D image reconstruction as a function of time during the imaging period is determined. The first amplitude corresponds to a surface region 7 on a surface of the object 6. A first motion trace 5, which represents an amplitude of a motion of the surface region 7 as a function of time during the imaging period, is determined based on the first amplitude.

The motion of the surface region is, in particular, caused by or, in other words, corresponds to a respiratory motion of the patient.

It is noted that, since the first motion trace 5 is determined directly based on the 4D image reconstruction, it may be given in absolute physical units, for example millimeters. This simplifies the use of the first motion trace 5 for gating decisions during subsequent treatments, for example assisted with surface-based gating devices or internal fluoroscopic or MRI guidance.

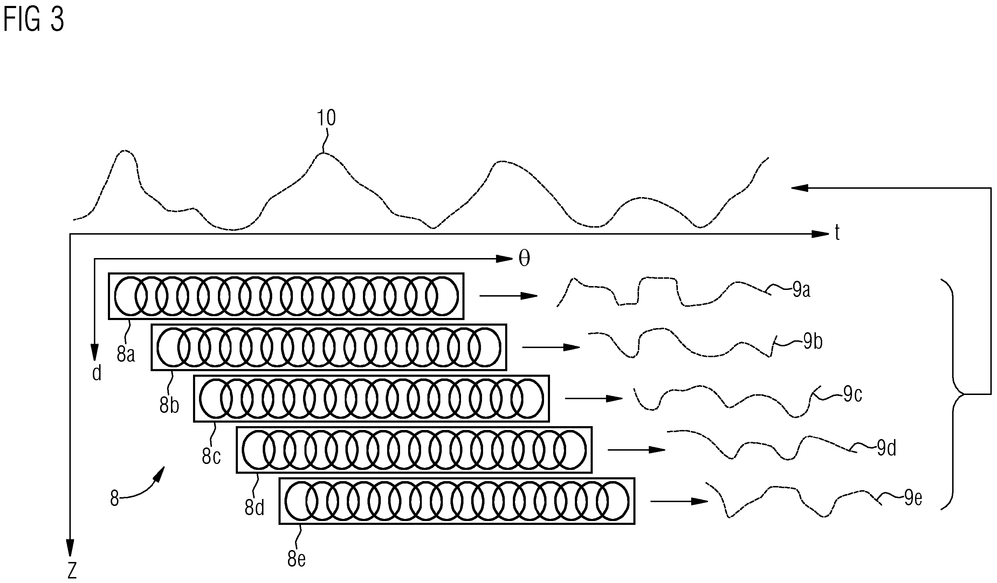

FIG 3 shows schematically aspects of a further exemplary embodiment of a computer-implemented method for determining object motion according to the invention. The method of FIG 3 may be based on the method described with respect to FIG 1 and FIG 2. However, the additional steps described with respect to FIG 3 may also be carried out independent of the steps described with respect to FIG 1 and FIG 2.

In particular, a plurality of imaging datasets 8 representing the imaged object 6 at at least two different longitudinal positions according to a predefined longitudinal axis z is received, wherein each of the imaging datasets 8 corresponds to a respective imaging subperiod within the imaging period. In particular, the plurality of imaging datasets 8 may comprise a plurality of sinograms 8a, 8b, 8c, 8d, 8e, in particular in parallel-beam geometry.

For each of the imaging datasets 8a, 8b, 8c, 8d, 8e, a respective preliminary motion trace 9a, 9b, 9c, 9d, 9e, which represents an amplitude of a motion of the object 6 during the respective acquisition subperiod as a function of time t, is determined by applying a motion estimation algorithm to the respective imaging dataset. A third motion trace 10, which represents the amplitude of the motion of the object 6 at least during a union of the acquisition subperiods as a function of time t, is determined based on the determined preliminary motion traces 9a, 9b, 9c, 9d, 9e.

The sinograms 8a, 8b, 8c, 8d, 8e are 2D maps of the X-ray attenuation by the object 6 as a function of the angulation angle *θ* and the detector pixel position d in a direction perpendicular to the longitudinal axis z (it is noted that d and z are shown as parallel directions in FIG 3 for the purpose of an easier visualization only).

In the embodiment of FIG 3, the sinograms 8a, 8b, 8c, 8d, 8e are for example acquired during a spiral data acquisition scheme. Therein, the patient table 3 may for example be moved parallel to the longitudinal direction z while the data is acquired for a multitude of angulation angles *θ* for each sinogram 8a, 8b, 8c, 8d, 8e. In particular, each angulation angle *θ* corresponds to a time point ${t}_{θ} = {t}_{0} + \frac{Rθ}{2 π}$, wherein R denoted the time required for a variation of the angulation angle by 2*π*.

In particular, the imaging datasets 8 comprise a respective sinogram 8a, 8b, 8c, 8d, 8e for each z-position, wherein the start time *t*₀ of the sinograms 8a, 8b, 8c, 8d, 8e is shifted from one sinogram 8a, 8b, 8c, 8d, 8e to the next.

For each sinogram 8a, 8b, 8c, 8d, 8e, a temporal feature extraction method such as the one described in the publication of Schleyer et al. is used to extract the respective preliminary motion trace 9a, 9b, 9c, 9d, 9e. Each of those respective preliminary motion trace 9a, 9b, 9c, 9d, 9e is potentially inaccurate since only a single z-position is covered and/or since the object might barely move or might not move in some of the acquisition subperiods.

To overcome these uncertainties, the third motion trace 10 is generated as a refined motion trace for all acquisition subperiods. A very easy way would be to average all existing estimates for a given time point. However, a trained MLM may also be used, in particular may be applied to input data, which depends on the determined preliminary motion traces 9a, 9b, 9c, 9d, 9e, to predict the third motion trace 10. Such MLM is capable of identifying correlated breathing features both in the direction of t and z, that is ignoring poorly defined or irrelevant information or estimating breathing motion at z-positions with minimal motion by propagating motion from other z-positions.

For example, combination of a CNN encoder and a sequence decoder, for example an RNN, LSTM, GTU (gated recurrent units) or temporal transformer, may be used to estimate third motion trace 10 in one shot. Alternatively, the sinograms 8a, 8b, 8c, 8d, 8e may be converted into respective sequences of inputs, where z is a separate parameter. In order to improve the convergence of the MLM, the problem could be formulated as a multi-class, for example 10-class, classification problem, where the time axis is discretized in multiple, in particular 10, respiratory phases.

For example, the 4D reconstruction as described with respect to FIG 1 and FIG 2 may be generated based on the plurality of imaging datasets 8 and the third motion trace 10. In particular, the third motion trace 10 may be validated depending on the first motion trace 5. To this end, for example a deviation of the third motion trace 10 from the first motion trace 5 may be computed. In particular, if the deviation is larger than a predefined maximum deviation, the 4D image reconstruction 4 may be re-generated depending on the plurality of imaging datasets 8 and the first motion trace 5.

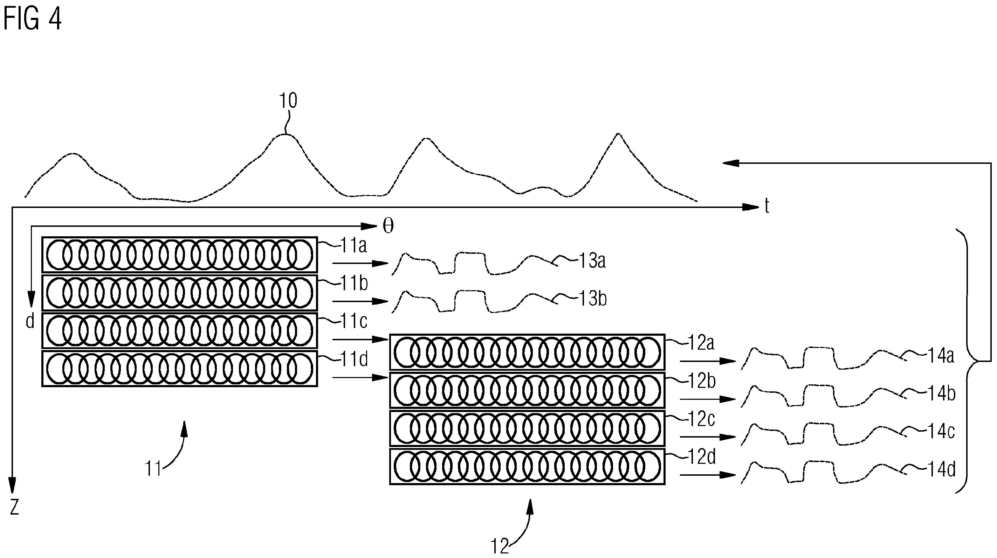

FIG 4 shows schematically aspects of a further exemplary embodiment of a computer-implemented method for determining object motion according to the invention, which is based on the embodiment of FIG 3. The embodiment of FIG 4 differs from the embodiment of FIG 3, in particular, by the underlying acquisition scheme used for generating imaging datasets 11, 12 (instead of the imaging datasets 8 of FIG 3).

Also in FIG 4, the imaging datasets 10, 11 are respective sinograms 11a, 11b, 11c, 11d, 12a, 12b, 12c, 12d. In FIG 4, there are two subsets of imaging datasets 11, 12 shown, namely a first subset 11 with first sinograms 11a, 11b, 11c, 11d and a second subset 12 with sinograms 12a, 12b, 12c, 12d. In particular, within a subset 11, 12, all sinograms 11a, 11b, 11c, 11d, 12a, 12b, 12c, 12d may start and end at the same time. In other words, the acquisition subperiods are the same for all sinograms 11a, 11b, 11c, 11d, 12a, 12b, 12c, 12d within a subset 11, 12, while there may be a temporal gap between them. This may for example be the case if sequence or ciné scan is used. Therein, a fixed longitudinal position of the patient table 3 is maintained while the data for the sinograms 11a, 11b, 11c, 11d of the first subset 11. After that, the longitudinal position of the patient table 3 is changed and then data for the sinograms 12a, 12b, 12c, 12d of the second subset 12 are acquired for a fixed position of the patient table 3 again.

In embodiments using the MLM for generating the third motion curve 10, compared to the FIG 3, the MLM here has more consistent data for each subset 11, 12 of sinograms 11a, 11b, 11c, 11d, 12a, 12b, 12c, 12d and also is able to estimate the third motion curve 10 in the temporal gap between the subsets 11, 12.

In the embodiments visualized in FIG 3 and FIG 4, a standard deviation of the preliminary motion traces 9a-9e, 13a, 13b, 14a-14d may be determined as a measure for the uncertainty of the respective trace. Alternatively, the uncertainty may be estimated jointly by the MLM using, for example, Monte Carlo Drop-out at inference time or a specialized gaussian process layer at the end of the decoder. Such methods allow to extract an estimation of uncertainty for each output.

To further speed-up the estimation time, the sinograms 8a, 8b, 8c, 8d, 8e, 11a, 11b, 11c, 11d, 12a, 12b, 12c, 12d may be generated sparsely using large steps in z and/or by avoiding certain angular ranges and/or including only angular ranges, where motion is expected to be strongest.

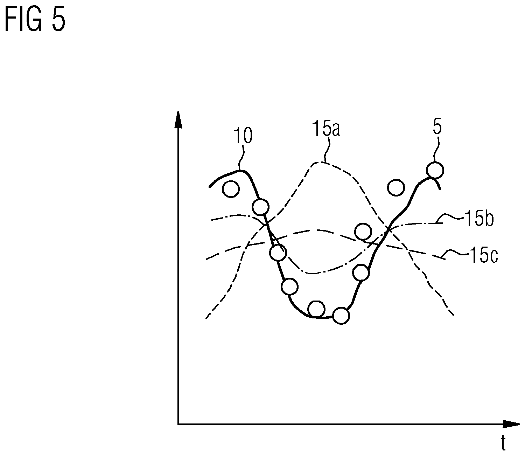

FIG 5 shows schematically aspects of a further exemplary embodiment of a computer-implemented method for determining object motion according to the invention, which is based on the embodiment of FIG 2.

In this embodiment, a second amplitude of a motion of a second ROI in the 4D image reconstruction 4, which corresponds to a region or point inside the object 6, as a function of time during the imaging period is determined based on the 4D image reconstruction 4. The second ROI may for example correspond to the location of a tumor.

A second motion trace 15a, which represents an amplitude of a motion of the region or point inside the object 6 as a function of time during the imaging period, is determined based on the second amplitude.

For example, a correlation measure between the motion of the region or point inside the object 6 and the motion of the surface region 7 is determined based on the first motion trace 5 and the second motion trace 15a. The correlation measure may, for example, be given by a ratio of the average value of the first motion trace 5 to the average value of the second motion trace 15a or by the inverse of this ratio.

Consequently, the correlation measure may be used in the future to translate a measured motion trace of the first ROI to a motion of the region or point inside the object 6. This may be particularly useful for planning a radiotherapy treatment.

For example, an allowed range for the motion of the region or point inside the patient is predefined. For example, it may be specified that the region or point inside the patient, for example the tumor, is allowed to move only a few millimeters from its average position or rest position. It may for example be specified that ionizing radiation for the radiotherapy treatment shall only be applied when the region or point inside the patient has not moved by more than a maximum amplitude, for example. Based on this limitation, a corresponding limitation for the respiratory amplitude may be computed using the correlation measure. The respiratory amplitude or, in other words, the amplitude of the surface region 7, may be monitored, for example, using an external gating device. The radiotherapy treatment can therefore be planned accurately.

FIG 5 also shows further motion traces 15b, 15c, which represent further amplitudes of the motion of the region or point inside the object 6 as a function of time during the imaging period. The second motion trace 15a and the further motion traces 15b, 15c may for example correspond to different directions or components of the motion. While the second motion trace 15a may for example correspond to direction parallel to the motion of the first amplitude of the motion of the first ROI, which is represented by the first motion trace 5, for example the y-direction, the further motion traces 15b, 15c may correspond to directions which are perpendicular to the motion represented by the first motion trace 5, for example the x- and the z-direction, respectively.

In some embodiments, the first motion trace 5 and the second motion trace 10 may be displayed to a user via the display device 17. The user may then validate the first motion trace 5 by comparing it to the second motion trace 10. The validation may, however, be carried out automatically as well in addition or alternatively.

In addition or alternatively, the second motion trace 15a and, if provided, the further motion traces 15b, 15c may be displayed to the user via the display device 17. The user may then assess the correlation between the motion of the region or point inside the object 6 and the second motion trace 15a, the further motion traces 15b, 15c and/or the third motion trace 10.

The available motion traces may also be exported to an oncology-information system to be used for treatment planning. Additionally, the location of the first ROI may be exported. This allows for positioning of the patient using a surface-based or fluoroscopic or MR-guided system as well as extraction of a surface-based gating signal at a LINAC using the same ROI, thereby allowing to plan gating decisions in a comprehensive manner. The planning of gating decisions could additionally be aided by a user interface by allowing the user to select gates and sending them to the LINAC as well.

As mentioned above, an MLM may be used for generating the third motion curve 10. The MLM may be an ANN.

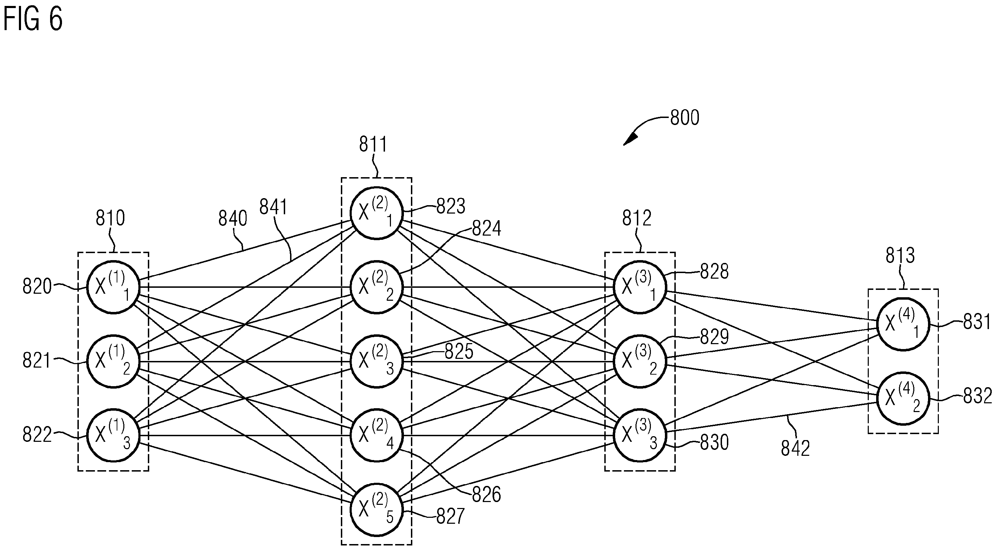

FIG 6 displays an embodiment of an ANN 800, which is for example designed as an MLP. The ANN 800 comprises nodes 820, ..., 832 and edges 840, ..., 842, wherein each edge 840, ..., 842 is a directed connection from a first node 820, ..., 832 to a second node 820, ..., 832. In general, the first node 820, ..., 832 and the second node 820, ..., 832 are different nodes 820, ..., 832. It is, however, also possible that the first node 820, ..., 832 and the second node 820, ..., 832 are identical. For example, in FIG 6, the edge 840 is a directed connection from the node 820 to the node 823, and the edge 842 is a directed connection from the node 830 to the node 832. An edge 840, ..., 842 from a first node 820, ..., 832 to a second node 820, ..., 832 is also denoted as ingoing edge for the second node 820, ..., 832 and as outgoing edge for the first node 820, ..., 832.

In this example, the nodes 820, ..., 832 of the artificial neural network 800 can be arranged in layers 810, ..., 813, wherein the layers can comprise an intrinsic order introduced by the edges 840, ..., 842 between the nodes 820, ..., 832. In particular, edges 840, ..., 842 can exist only between neighboring layers of nodes. In the displayed example, there is an input layer 810 comprising only nodes 820, ..., 822 without an incoming edge, an output layer 813 comprising only nodes 831, 832 without outgoing edges, and hidden layers 811, 812 in-between the input layer 810 and the output layer 813. In general, the number of hidden layers 811, 812 can be chosen arbitrarily. In an MLP, this number is at least one. The number of nodes 820, ..., 822 within the input layer 810 usually relates to the number of input values of the artificial neural network 800, and the number of nodes 831, 832 within the output layer 813 usually relates to the number of output values of the artificial neural network 800.

**In particular,** a real number can be assigned as a value to every node 820, ..., 832 of the artificial neural network 800. Here, x⁽ⁿ⁾ᵢ denotes the value of the i-th node 820, ..., 832 of the n-th layer 810, ..., 813. The values of the nodes 820, ..., 822 of the input layer 810 are equivalent to the input values of the artificial neural network 800. The values of the nodes 831, 832 of the output layer 813 are equivalent to the output value of the artificial neural network 800. Furthermore, each edge 840, ..., 842 can comprise a weight being a real number. In particular, the weight is a real number within the interval [-1, 1] or within the interval [0, 1]. Here, w^{(m,n)}_{i,j} denotes the weight of the edge between the i-th node 820, ..., 832 of the m-th layer 810, ..., 813 and the j-th node 820, ..., 832 of the n-th layer 810, ..., 813. Furthermore, the abbreviation w⁽ⁿ⁾_{i,j} is defined for the weight w^{(n,n+1)}_{i,j}. In particular, to calculate the output values of the neural network 800, the input values are propagated through the neural network 800. In particular, the values of the nodes 820, ..., 832 of the (n+1)-th layer 810, ..., 813 can be calculated based on the values of the nodes 820, ..., 832 of the n-th layer 810, ..., 813 by ${x}_{j}^{\left(n+1\right)} = f \left({\sum }_{i} {x}_{i}^{\left(n\right)} {w}_{i , j}^{\left(n\right)}\right) .$

Herein, the function f is denoted as transfer function or activation function. Known transfer functions are step functions, the sigmoid functions, for example the logistic function, the generalized logistic function, the hyperbolic tangent, the arctangent function, the error function, the smoothstep function, or rectifier functions. The transfer function is for example used for normalization purposes. In particular, the values are propagated layer-wise through the neural network 800, wherein values of the input layer 810 are given by the input of the neural network 800, wherein values of the first hidden layer 811 can be calculated based on the values of the input layer 810 of the neural network 800, wherein values of the second hidden layer 812 can be calculated based on the values of the first hidden layer 811, and so forth.

In order to set the values w^{(m,n)}_{i,j} for the edges, the neural network 800 has to be trained using training data. In particular, training data comprises training input data and training output data (denoted as tᵢ). For a training step, the neural network 800 is applied to the training input data to generate calculated output data. In particular, the training data and the calculated output data comprise a number of values, said number being equal with the number of nodes of the output layer. In particular, a comparison between the calculated output data and the training data is used to recursively adapt the weights within the neural network 800 (backpropagation algorithm). In particular, the weights are changed according to ${w}_{i , j}^{′ \left(n\right)} = {w}_{i , j}^{\left(n\right)} - γ {δ}_{j}^{\left(n\right)} {x}_{i}^{\left(n\right)} ,$ wherein γ is a predefined learning rate, and the numbers δ⁽ⁿ⁾ⱼ can be recursively calculated as ${δ}_{j}^{\left(n\right)} = \left({\sum }_{k} {δ}_{k}^{\left(n+1\right)} {w}_{j , k}^{\left(n+1\right)}\right) f ′ \left({x}_{i}^{\left(n\right)}{w}_{i , j}^{\left(n\right)}\right)$ based on δ⁽ⁿ⁺¹⁾ⱼ, if the (n+1)-th layer is not the output layer 813, and ${δ}_{j}^{\left(n\right)} = \left({x}_{j}^{\left(n+1\right)}-{t}_{j}^{\left(n+1\right)}\right) f ′ \left({x}_{i}^{\left(n\right)}{w}_{i , j}^{\left(n\right)}\right) ,$ **if the (n+1)-th** layer is the output layer 813, wherein f' is the first derivative of the activation function, and t⁽ⁿ⁺¹⁾ⱼ is the comparison training value for the j-th node of the output layer 813.

As mentioned earlier, the MLM may for example be or comprise a CNN.

A convolutional neural network, CNN, is an ANN that uses a convolution operation instead of general matrix multiplication in at least one of its layers. These layers are denoted as convolutional layers. In particular, a convolutional layer performs a dot product of one or more convolution kernels with the convolutional layer's input data, wherein the entries of the one or more convolution kernel are parameters or weights that may be adapted by training. In particular, one can use the Frobenius inner product and the ReLU activation function. A convolutional neural network can comprise additional layers, for example pooling layers, fully connected layers, and/or normalization layers.

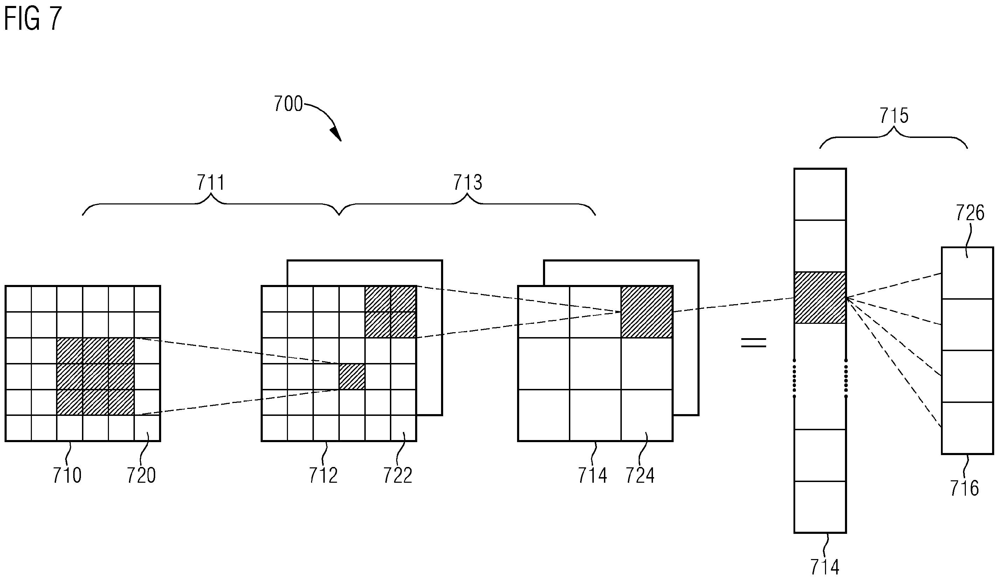

By using convolutional neural networks, the input can be processed in a very efficient way because a convolution operation based on different kernels can extract various image features so that by adapting the weights of the convolution kernel the relevant image features can be found during training. Furthermore, based on the weight-sharing in the convolutional kernels fewer parameters need to be trained, which prevents overfitting in the training phase and allows to have faster training or more layers in the network, improving the performance of the network. FIG 7 displays an exemplary embodiment of a convolutional neural network 700. In the displayed embodiment, the convolutional neural network 700 comprises an input node layer 710, a convolutional layer 711, a pooling layer 713, a fully connected layer 714 and an output node layer 716, as well as hidden node layers 712, 714. Alternatively, the convolutional neural network 200 can comprise several convolutional layers 711, several pooling layers 713 and/or several fully connected layers 715, as well as other types of layers. The order of the layers can be chosen arbitrarily, usually fully connected layers 715 are used as the last layers before the output layer 716.

In particular, within a convolutional neural network 700 nodes 720, 722, 724 of a node layer 710, 712, 714 can be considered to be arranged as a d-dimensional matrix or as a d-dimensional image. In particular, in the two-dimensional case the value of the node 720, 722, 724 indexed with i and j in the n-th node layer 710, 712, 714 can be denoted as x(n)[i, j]. However, the arrangement of the nodes 720, 722, 724 of one node layer 710, 712, 714 does not have an effect on the calculations executed within the convolutional neural network 700 as such, since these are given solely by the structure and the weights of the edges.

A convolutional layer 711 is a connection layer between an anterior node layer 710 with node values x(n-1) and a posterior node layer 712 with node values x(n). In particular, a convolutional layer 711 is characterized by the structure and the weights of the incoming edges forming a convolution operation based on a certain number of kernels. In particular, the structure and the weights of the edges of the convolutional layer 711 are chosen such that the values x(n) of the nodes 722 of the posterior node layer 712 are calculated as a convolution x(n) = K * x(n-1) based on the values x(n-1) of the nodes 720 anterior node layer 710, where the convolution * is defined in the two-dimensional case as ${x}^{\left(n\right)} \left[i, j\right] = \left(K∗{x}^{\left(n-1\right)}\right) \left[i, j\right] = {\sum }_{i ′} {\sum }_{j ′} K \left[i′,j′\right] ⋅ {x}^{\left(n-1\right)} \left[i-i′,j-j′\right] .$

Herein, the kernel K is a d-dimensional matrix, in the present example a two-dimensional matrix, which is usually small compared to the number of nodes 720, 722, for example a 3x3 matrix, or a 5x5 matrix. In particular, this implies that the weights of the edges in the convolution layer 711 are not independent, but chosen such that they produce said convolution equation. In particular, for a kernel being a 3x3 matrix, there are only 9 independent weights, each entry of the kernel matrix corresponding to one independent weight, irrespectively of the number of nodes 720, 722 in the anterior node layer 710 and the posterior node layer 712.

In general, convolutional neural networks 700 use node layers 710, 712, 714 with a plurality of channels, in particular, due to the use of a plurality of kernels in convolutional layers 711. In those cases, the node layers can be considered as (d+1)-dimensional matrices, the first dimension indexing the channels. The action of a convolutional layer 711 is then in a two-dimensional example defined as ${x}_{b}^{\left(n\right)} \left[i, j\right] = {\sum }_{a} \left({K}_{a , b}∗{x}_{a}^{\left(n-1\right)}\right) \left[i, j\right] = {\sum }_{a} {\sum }_{i ′} {\sum }_{j ′} {K}_{a , b} \left[i′,j′\right] ⋅ {x}_{a}^{\left(n-1\right)} \left[i-i′,j-j′\right] ,$ wherein ${x}_{a}^{\left(n\right)}$ corresponds to the a-th channel of the anterior node layer 710, ${x}_{b}^{\left(n\right)}$ corresponds to the b-th channel of the posterior node layer 712 and *K_{a,b}* corresponds to one of the kernels. If a convolutional layer 711 acts on an anterior node layer 710 with A channels and outputs a posterior node layer 712 with B channels, there are A·B independent d-dimensional kernels *K_{a,b}.*

In general, in convolutional neural networks 700 activation functions may be used. In this embodiment, ReLU (rectified linear unit) is used, with R(z) = max(0, z), so that the action of the convolutional layer 711 in the two-dimensional example is ${x}_{b}^{\left(n\right)} \left[i, j\right] = R \left({\sum }_{a} \left({K}_{a , b}∗{x}_{a}^{\left(n-1\right)}\right) \left[i, j\right]\right) = R \left({\sum }_{a} {\sum }_{i ′} {\sum }_{j ′} {K}_{a , b} \left[i′,j′\right] ⋅ {x}_{a}^{\left(n-1\right)} \left[i-i′,j-j′\right]\right) .$

It is also possible to use other activation functions, for example ELU (exponential linear unit), LeakyReLU, Sigmoid, Tanh or Softmax.

In the displayed embodiment, the input layer 710 comprises 36 nodes 720, arranged as a two-dimensional 6x6 matrix. The first hidden node layer 712 comprises 72 nodes 722, arranged as two two-dimensional 6x6 matrices, each of the two matrices being the result of a convolution of the values of the input layer with a 3x3 kernel within the convolutional layer 711. Equivalently, the nodes 722 of the first hidden node layer 712 can be interpreted as arranged as a three-dimensional 2x6x6 matrix, wherein the first dimension correspond to the channel dimension.

An advantage of using convolutional layers 711 is that spatially local correlation of the input data can exploited by enforcing a local connectivity pattern between nodes of adjacent layers, in particular by each node being connected to only a small region of the nodes of the preceding layer.

A pooling layer 713 is a connection layer between an anterior node layer 712 with node values x(n-1) and a posterior node layer 714 with node values x(n). In particular, a pooling layer 713 can be characterized by the structure and the weights of the edges and the activation function forming a pooling operation based on a non-linear pooling function f. For example, in the two-dimensional case the values x(n) of the nodes 724 of the posterior node layer 714 can be calculated based on the values x(n-1) of the nodes 722 of the anterior node layer 712 as ${x}_{b}^{\left(n\right)} \left[i, j\right] = f \left({x}_{b}^{\left(n-1\right)}\left[{id}_{1}, {jd}_{2}\right],…, {x}_{b}^{\left(n-1\right)}\left[\left(i+1\right){d}_{1}-1,\left(j+1\right){d}_{2}-1\right]\right) .$

In other words, by using a pooling layer 713, the number of nodes 722, 724 can be reduced by re-placing a number d1·d2 of neighboring nodes 722 in the anterior node layer 712 with a single node 722 in the posterior node layer 714 being calculated as a function of the values of said number of neighboring nodes. In particular, the pooling function f can be the max-function, the average or the L2-Norm. In particular, for a pooling layer 713 the weights of the incoming edges are fixed and are not modified by training.

The advantage of using a pooling layer 713 is that the number of nodes 722, 724 and the number of parameters is reduced. This leads to the amount of computation in the network being reduced and to a control of overfitting.

In the displayed embodiment, the pooling layer 713 is a max-pooling layer, replacing four neighboring nodes with only one node, the value being the maximum of the values of the four neighboring nodes. The max-pooling is applied to each d-dimensional matrix of the previous layer. In this embodiment, the max-pooling is applied to each of the two two-dimensional matrices, reducing the number of nodes from 72 to 18.

In general, the last layers of a convolutional neural network 700 may be fully connected layers 715. A fully connected layer 715 is a connection layer between an anterior node layer 714 and a posterior node layer 716. A fully connected layer 713 can be characterized by the fact that a majority, in particular, all edges between nodes 714 of the anterior node layer 714 and the nodes 716 of the posterior node layer are present, and wherein the weight of each of these edges can be adjusted individually.

In this embodiment, the nodes 724 of the anterior node layer 714 of the fully connected layer 715 are displayed both as two-dimensional matrices, and additionally as non-related nodes, indicated as a line of nodes, wherein the number of nodes was reduced for a better presentability. This operation is also denoted as flattening. In this embodiment, the number of nodes 726 in the posterior node layer 716 of the fully connected layer 715 smaller than the number of nodes 724 in the anterior node layer 714. Alternatively, the number of nodes 726 can be equal or larger.

Furthermore, in this embodiment the Softmax activation function is used within the fully connected layer 715. By applying the Softmax function, the sum the values of all nodes 726 of the output layer 716 is 1, and all values of all nodes 726 of the output layer 716 are real numbers between 0 and 1. In particular, if using the convolutional neural network 700 for categorizing input data, the values of the output layer 716 can be interpreted as the probability of the input data falling into one of the different categories.

In particular, convolutional neural networks 700 can be trained based on the backpropagation algorithm. For preventing overfitting, methods of regularization can be used, for example dropout of nodes 720, ..., 724, stochastic pooling, use of artificial data, weight decay based on the L1 or the L2 norm, or max norm constraints.

As mentioned earlier, the MLM may be or comprise an RNN.

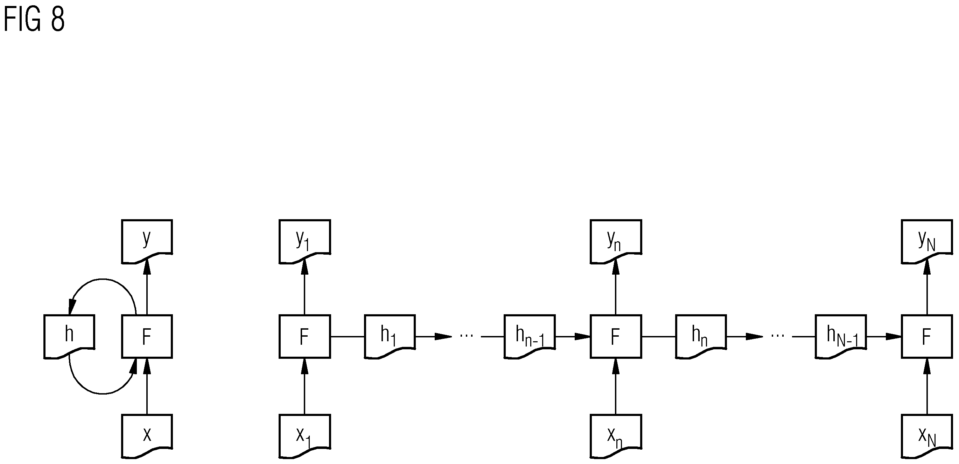

FIG 8 shows a recurrent MLM F, in particular a recurrent neural network, RNN. A recurrent MLM F is a machine learning model whose output depends not only on the current input value and the parameters of the MLM adapted by the training process, but also on a hidden state vector, where the hidden state vector is based on previous inputs used for the recurrent MLM F. In particular, the recurrent MLM F may include additional memory states or additional structures that incorporate time delays or comprise feedback loops.

An RNN may be described as an ANN in which the connections between the nodes form a directed graph along a temporal sequence. In particular, an RNN may be interpreted as a directed acyclic graph. In particular, the RNN can be a finite impulse RNN or an infinite impulse RNN. A finite impulse RNN can be unrolled and replaced with a pure feedforward ANN, whereas an infinite impulse RNN cannot be unrolled and replaced with a pure feedforward ANN. In particular, training of an RNN can be based on the BPTT (backpropagation through time) algorithm, on the RTRL (real-time recurrent learning) algorithm and/or on genetic algorithms.

In FIG 8, the structure of a recurrent MLM F is shown schematically on the left in a recurrent representation and on the right in an unfolded representation. The recurrent MLM receives as input several input data sets *x*₁, *... , x_{N}* and generates a corresponding number of output data sets *y*₁, ... , *y_{N}.* Furthermore, the output depends on a so-called hidden vector *h*₁*, ... , h_{N},* which implicitly contains information about input data sets that were previously used as input for the recurrent MLM F. By using these hidden vectors *h*₁, *..., h_{N},* the sequentiality of the input data sets can be utilized. In a single processing step, the recurrent MLM F receives as input the hidden vector *h*_{*n*-1} created in the previous step and an input data set *xₙ*. In this step, the recurrent MLM F generates an updated hidden vector *hₙ* and an output data set *yₙ* as output. In other words, a processing step calculates $\left({y}_{n}, {h}_{n}\right) = F \left({x}_{n}, {h}_{n - 1}\right) .$ or by splitting the recurrent MLM F into a part *F_{y},* which calculates the output data, and *Fₕ,* which calculates the hidden vector, a processing step calculates ${y}_{n} = {F}_{y} \left({x}_{n}, {h}_{n - 1}\right) ,$ ${h}_{n} = {F}_{h} \left({x}_{n}, {h}_{n - 1}\right) .$

For the initial processing step *n* = 1, *h*_{*n*-1} = *h*₀ can be randomly chosen or all entries can be set equal to zero. The parameters of the recurrent MLM F, which have been trained before based on training data sets, do not change between the different processing steps. In particular, the output data and the hidden vector of a processing step can depend on all previous input data sets used in the preceding steps: ${y}_{n} = {F}_{y} \left({x}_{n},{F}_{h}\left({x}_{n - 1}, {h}_{n - 1}\right)\right) ,$ ${h}_{n} = {F}_{h} \left({x}_{n},{F}_{h}\left({x}_{n - 1}, {h}_{n - 1}\right)\right) .$

Independent of the grammatical term usage, individuals with male, female or other gender identities are included within the term.

## Claims

1. Computer-implemented method for determining object motion information based on time-resolved medical imaging data, wherein
- a time-resolved 3D image reconstruction (4) representing an imaged object (6) during an imaging period is received;
- a first amplitude of a motion of a first region of interest in the time-resolved 3D image reconstruction (4), which corresponds to a surface region (7) on a surface of the object (6), as a function of time during the imaging period is determined based on the time-resolved 3D image reconstruction (4); and
- a first motion trace (5), which represents an amplitude of a motion of the surface region (7) as a function of time during the imaging period, is determined based on the first amplitude.

2. Computer-implemented method according to claim 1, wherein
- a second amplitude of a motion of a second region of interest in the time-resolved 3D image reconstruction (4), which corresponds to a region or point inside the object (6), as a function of time during the imaging period is determined based on the time-resolved 3D image reconstruction (4);
- a second motion trace (15a, 15b, 15c), which represents an amplitude of a motion of the region or point inside the object (6) as a function of time during the imaging period, is determined based on the second amplitude; and
- a correlation measure between the motion of the region or point inside the object (6) and the motion of the surface region (7) is determined based on the first motion trace (5) and the second motion trace (15a, 15b, 15c).

3. Computer-implemented method for planning a medical treatment of a patient, wherein a computer-implemented method according to claim 2 is carried out, the object (6) is the patient, the motion of the surface region (7) corresponds to a respiratory motion of the patient, and
- an allowed range for the amplitude of the respiratory motion is determined based on a predefined allowed range for the motion of the region or point inside the patient and/or the correlation measure; and
- treatment planning data for the medical treatment is generated depending on the allowed range for the amplitude of the respiratory motion.

4. Computer-implemented method according to claim 3, wherein the medical treatment is a radiotherapy treatment, wherein the treatment planning data comprises a provision for restricting an application of an ionizing radiation to the region or point inside the patient depending on the amplitude of the respiratory motion.

5. Computer-implemented method according to one of the preceding claims, wherein
- a plurality of imaging datasets (8, 11, 12) representing the imaged object (6) at at least two different longitudinal positions according to a predefined longitudinal axis is received, wherein each of the imaging datasets (8, 11, 12) corresponds to a respective imaging subperiod within the imaging period;
- for each of the imaging datasets (8, 11, 12), a respective preliminary motion trace (9a-9e, 13a, 13b, 14a-14d), which represents an amplitude of a motion of the object (6) during the respective acquisition subperiod as a function of time, is determined by applying a motion estimation algorithm to the respective imaging dataset; and
- a third motion trace (10), which represents the amplitude of the motion of the object (6) as a function of time at least during a union of the acquisition subperiods, is determined based on the determined preliminary motion traces (9a-9e, 13a, 13b, 14a-14d).

6. Computer-implemented method according to claim 5, wherein the time-resolved 3D image reconstruction (4) is generated depending on the plurality of imaging datasets (8, 11, 12) and the third motion trace (10).

7. Computer-implemented method according to claim 6, wherein a longitudinal extent (Δ) along the longitudinal axis of the first region of interest is determined and
- all longitudinal positions of the plurality of imaging datasets (8, 11, 12) lie within the longitudinal extent; or
- an initial superset of imaging datasets (8, 11, 12) representing the imaged object (6) is received and the plurality of imaging datasets (8, 11, 12) is selected from the initial superset of imaging datasets (8, 11, 12) such that all longitudinal positions of the plurality of imaging datasets (8, 11, 12) lie within the longitudinal extent.

8. Computer-implemented method according to one of claims 6 or 7, wherein the third motion trace (10) is validated depending on the first motion trace (5).

9. Computer-implemented method according to claim 8, wherein
- the validating of the third motion trace (10) comprises computing a deviation of the third motion trace (10) from the first motion trace (5); and
- if the deviation is larger than a predefined maximum deviation, the time-resolved 3D image reconstruction (4) is re-generated depending on the plurality of imaging datasets (8, 11, 12) and the first motion trace (5).

10. Computer-implemented method according to one of claims 5 to 9, wherein determining the third motion trace (10) comprises applying a machine learning model, MLM, to input data, which depends on the determined preliminary motion traces (9a-9e, 13a, 13b, 14a-14d).

11. Computer-implemented method according to one of claims 5 to 10, wherein
- at least two of the imaging subperiods are different from each other and/or overlap each other; and/or
- the imaging period comprises a time period, which is contained by only one of the imaging subperiods; and/or
- the imaging period comprises a further time period, which is contained by none of the imaging subperiods and the third motion trace (10) represents the amplitude of the motion of the object (6) also during the further time period.

12. Computer-implemented method according to one of claims 5 to 11, wherein
- the plurality of imaging datasets (8, 11, 12) corresponds to respective sinograms of an X-ray detector; or
- the plurality of imaging datasets (8, 11, 12) corresponds to respective X-ray projection images.

13. Data processing system (16), which is configured to carry out a computer-implemented method according to one of the preceding claims.

14. Medical imaging system (1) comprising a data processing system (16) according to claim 13 and an imaging device (2), which is configured to generate imaging raw data representing the imaged object (6) and the data processing system (16) is configured to generate the time-resolved 3D image reconstruction (4) based on the imaging raw data.

15. Computer program product comprising instructions, which, when executed by a data processing system (16), cause the data processing system (16) to carry out a computer-implemented method according to one of claims 1 to 12.
